# FASCICULE DE BREVET EUROPEEN

(11) **EP 1 113 682 B1**
(45) Date de publication et mention de la délivrance du brevet: **31.01.2007**
(21) Numéro de dépôt: 00403626.5
(22) Date de dépôt: 21.12.2000
(51) Int. Cl.: H04Q 7/30

(54) **Procédé d'établissement de mode de fonctionnement sans double transcodage dans un système cellulaire de radiocommunications mobiles**
Verfahren zum Aktivieren einer Arbeitsmodus ohne doppelte Umcodierung in einem zellularen Funkkommunikationssystem
Method for setting an operating mode without double transcoding in a cellular radio communication system

(30) Priorité: 31.12.1999 FR 9916822
(43) Date de publication de la demande: 04.07.2001
(73) Titulaire: ALCATEL, 75008 Paris (FR)
(72) Inventeur: Della Mea, Fabrice, 75014 Paris (FR)
(74) Mandataire: El Manouni, Josiane

(56) Documents cités:
- EP-A- 0 863 682
- WO-A-96/18272
- US-A- 5 649 299

## Description

La présente invention concerne d'une manière générale les systèmes cellulaires de radiocommunications mobiles.

La présente invention concerne plus particulièrement les services de parole, et les techniques mises en oeuvre dans ces systèmes pour optimiser la qualité de service.

D'une manière générale, différents modes de codage peuvent être utilisés pour la transmission de la parole sur l'interface radio, correspondant à différents compromis entre qualité de la parole et ressources radio nécessaires à sa transmission. Ainsi, dans le système GSM ("Global System for Mobile communications") les différents modes de codage suivants, entre autres, peuvent être utilisés:
- un mode plein débit (ou FR, pour "Full Rate" en anglais), correspondant à un débit de 13 kbit/s,
- un mode plein débit amélioré (ou EFR, pour "Enhanced Full Rate" en anglais) correspondant à un débit de 12,2 kbit/s,
- un mode demi-débit (ou HR, pour "Half Rate" en anglais), correspondant à un débit de 5,6 kbit/s.

Le mode HR est ainsi le mode le moins consommateur de ressources; il ne nécessite en effet qu'un demi-intervalle de temps (ou "time-slot" en anglais) au lieu d'un pour le mode FR. Le mode HR permet ainsi une augmentation de capacité par rapport aux modes FR ou EFR; en contrepartie, la qualité obtenue avec le mode HR est en général réduite par rapport à celle obtenue avec les modes FR ou EFR, notamment dans le cas de mauvaises conditions de transmission.

D'une manière générale, pour un mobile donné, le choix d'un mode de codage peut être effectué, de manière fixe ou adaptative, parmi l'ensemble des modes de codage supportés pour ce mobile (c'est-à-dire supportés par ce mobile et par les entités du système en charge d'un appel pour ce mobile, comme il sera entendu dans tout ce qui suit), et en fonction de critères prédéterminés, adaptés aux besoins. On peut par exemple se référer au document EP-A-0 863 682.

Des équipements appelés transcodeurs sont en outre prévus pour passer du mode de codage ainsi utilisé pour la transmission sur l'interface radio, à un mode de codage standard tel que le mode PCM (pour "Pulse Code Modulation" en anglais), utilisé de manière générale dans les réseaux filaires et correspondant à un débit de 64kbit/s. Dans le système GSM, un tel transcodeur est aussi appelé "TRAU", pour "Transcoder Rate Adaptor Unit" en anglais.

Si un tel transcodage est bien nécessaire pour le cas d'un appel entre un terminal mobile et un terminal fixe, il n'est en revanche pas nécessaire pour le cas d'un appel entre deux terminaux mobiles. Dans ce dernier cas, pour éviter de dégrader inutilement la parole en lui faisant subir inutilement deux transcodages successifs, on peut utiliser un mode de fonctionnement dit ici sans double transcodage, appelé aussi TFO, pour "Tandem Free Opération" en anglais. Un tel mode de fonctionnement est notamment spécifié dans les Recommendations GSM 02.53, GSM 03.53, GSM 08.62.

L'établissement du mode TFO requiert en général un dialogue ou échange de signalisation entre entités homologues du système en charge de l'appel pour chacun des mobiles concernés. Un des buts de cet échange de signalisation est de s'assurer que les deux transcodeurs concernés sont bien capables de fonctionner suivant le mode TFO. En outre, le mode de codage étant généralement sélectionné de façon indépendante pour chacun des mobiles concernés, un autre but de cet échange de signalisation est de faire en sorte qu'un mode de codage commun soit sélectionné pour le mode TFO, et donc éventuellement qu'un changement de mode de codage soit effectué pour au moins un de ces mobiles, pour le cas où le mode de codage sélectionné initialement pour ce mobile serait différent de ce mode de codage commun sélectionné pour le mode TFO.

Classiquement, le critère de sélection d'un mode de codage commun est, en conformité avec l'objectif recherché avec le mode TFO, un critère d'optimisation de qualité.

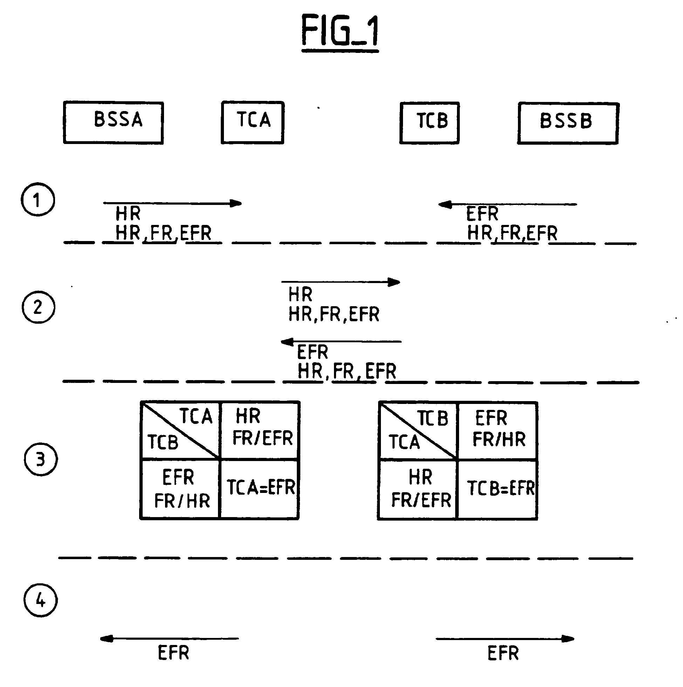

Ainsi que l'a observé le demandeur, un tel critère peut cependant, dans certains cas, conduire au contraire à une dégradation des performances du système, comme expliqué maintenant, sur un exemple, en relation avec la figure 1.

On considère le cas d'un appel entre deux mobiles situés dans deux cellules distinctes A et B. Les entités du système en charge de l'appel pour chacun de ces mobiles sont notées respectivement:
- BSSA et BSSB pour ce qui concerne les fonctions liées à la transmission sur l'interface radio (BSS étant ici utilisé pour "Base Station Sub-system" en anglais, et incluant les entités communément appelées BTS, pour "Base Transceiver Station" en anglais, et BSC, pour "Base Station Controller" en anglais),
- TCA et TCB pour ce qui concerne la fonction transcodage.

On considère en outre le cas d'une cellule A chargée et d'une cellule B non chargée, le mode de codage initialement sélectionné pour le mobile situé dans la cellule A étant le mode HR, et le mode de codage initialement sélectionné pour le mobile situé dans la cellule B étant l'un des modes FR et EFR, par exemple le mode EFR.

On considère en outre le cas où l'ensemble des modes de codage, à savoir HR, FR et EFR, est supporté pour chacun de ces mobiles.

Au cours d'une première étape notée 1, chaque BSS communique au transcodeur associé TC (suivant des techniques de signalisation spécifiques non rappelées ici) le mode de codage initialement sélectionné pour le mobile concerné, et la liste des modes de codage supportés pour ce mobile.

Au cours d'une deuxième étape notée 2, chaque transcodeur TC communique ces informations à l'autre transcodeur (également suivant des techniques de signalisation spécifiques non rappelées ici).

Si, comme cela est le cas dans l'exemple considéré, les modes de codage initialement sélectionnés de manière indépendante pour chacun des mobiles concernés sont différents (ce cas étant aussi appelé "codec mismatch" dans les recommendations GSM précitées), lors d'une troisième étape notée 3, chacun des transcodeurs sélectionne, sur la base des listes de modes de codage supportés correspondant à chacun de ces mobiles, et selon un même critère, un mode de codage commun pour le mode TFO.

Le critère classiquement utilisé pour une telle sélection de mode de codage commun étant, comme rappelé précédemment, celui d'optimisation de la qualité, dès lors qu'un des modes FR ou EFR est supporté de manière commune, il est sélectionné comme mode commun pour le mode TFO.

Ainsi, dans l'exemple considéré, et comme illustré au moyen de tableaux correspondants sur la figure 1, le mode de codage commun sélectionné à l'étape 3 est le mode EFR (sélectionné initialement pour le mobile situé dans la cellule B).

Lors d'une quatrième étape notée 4, chaque BSS est informé par le transcodeur associé TC, du mode de codage commun ainsi sélectionné pour le mode TFO.

Un changement de mode de codage est alors effectué (suivant des techniques connues et non rappelées ici) pour le mobile situé dans la cellule A, du mode HR vers le mode EFR.

Or, dans l'hypothèse considérée d'une cellule A déjà chargée, un tel procédé ne fait qu'accroître davantage la charge de cette cellule, et notamment augmenter le taux d'appels rejetés. Il en résulte alors une dégradation de performances pour le système, au lieu de l'amélioration escomptée avec le mode TFO.

La présente invention a notamment pour but d'éviter, dans la mesure du possible, de tels inconvénients, tout en conservant par ailleurs les avantages du mode TFO.

La présente invention a ainsi pour objet un procédé d'établissement de mode de fonctionnement sans double transcodage pour un appel de mobile à mobile, et de cellule à cellule, dans un système cellulaire de radiocommunications mobiles, ledit procédé comportant une étape de sélection d'un mode de codage commun pour chacun desdits mobiles, et étant essentiellement caractérisé en ce que ladite sélection d'un mode de codage commun tient compte de la charge de trafic dans au moins une desdites cellules.

Suivant une autre caractéristique, ledit mode de codage commun étant sélectionné sur la base de listes de modes de codage supportés pour chacun desdits mobiles, une liste de modes de codage supportés est réduite de manière à en éliminer les modes de codage les plus consommateurs de ressources, si le mobile correspondant est situé dans une cellule chargée.

Suivant une autre caractéristique, si aucun mode codage commun ne peut être sélectionné sur la base de listes de modes de codage supportés dont au moins une est une liste réduite, un mode de codage commun est alors sélectionné sur la base de listes de modes de codage supportés non réduites.

Suivant une autre caractéristique, le critère de sélection d'un mode de codage commun sur la base de listes de modes de codage supportés pour chacun desdits mobiles est un critère d'optimisation de qualité.

Suivant une autre caractéristique, des modes de codage étant initialement sélectionnés indépendamment l'un de l'autre pour chacun desdits mobiles, une liste de modes de codage supportés n'est réduite que si, en outre, le mode de codage initialement sélectionné pour le mobile correspondant est un des modes de codage les moins consommateurs de ressources.

Suivant une autre caractéristique, des modes de codage étant initialement sélectionnés indépendamment l'un de l'autre pour chacun desdits mobiles, il est en outre déterminé si les modes de codage sélectionnés initialement pour chacun desdits mobiles sont identiques:
- si oui, le mode de codage correspondant constitue ledit mode de codage commun,
- sinon, ledit mode de codage commun est sélectionné sur la base desdites listes de modes de codage supportés pour chacun desdits mobiles.

Suivant une autre caractéristique, ledit procédé comporte au moins une étape au cours de laquelle, pour chacun desdits mobiles, une entité dudit système en charge de l'appel pour ce mobile communique une liste de modes de codage supportés pour ce mobile à une entité homologue en charge de l'appel pour l'autre mobile, et une étape suivante au cours de laquelle chacune desdites entités sélectionne, sur la base des listes de modes de codage supportées pour chacun desdits mobiles, et selon un même critère, un mode de codage commun.

Suivant une autre caractéristique, ledit procédé comporte en outre une étape au cours de laquelle, pour chacun desdits mobiles, une entité dudit système en charge de l'appel pour ce mobile communique le mode de codage initialement sélectionné pour ce mobile à une entité homologue en charge de l'appel pour l'autre mobile, et une étape suivante au cours de laquelle chacune desdites entités détermine si les modes de codage initialement sélectionnés pour chacun desdits mobiles sont identiques.

Suivant une autre caractéristique, ledit système est un système de type GSM.

Suivant une autre caractéristique, un desdits modes de codage les moins consommateurs de ressources est le mode demi-débit.

Suivant une autre caractéristique, un desdits modes de codage les plus consommateurs de ressources est le mode plein débit.

Suivant une autre caractéristique, un desdits modes de codage les plus consommateurs de ressources est le mode plein débit amélioré.

La présente invention a également pour objet un système cellulaire de radiocommunications mobiles, pour la mise en oeuvre d'un tel procédé, ledit système comportant ainsi essentiellement, pour l'établissement de mode de fonctionnement sans double transcodage pour un appel de mobile à mobile, et de cellule à cellule, des moyens pour sélectionner un mode de codage commun pour chacun desdits mobiles, ladite sélection d'un mode de codage commun tenant compte de la charge de trafic dans au moins une desdites cellules.

D'autres objets et caractéristiques de la présente invention apparaîtront à la lecture de la description suivante, faite en relation avec les dessins ci-annexés dans lesquels:
- la figure 1 est destinée à illustrer, sur un exemple, un procédé classique pour l'établissement du mode TFO,
- la figure 2 est destinée à illustrer, sur un exemple, un procédé suivant l'invention, pour l'établissement du mode TFO, suivant un premier exemple de réalisation,
- la figure 3 est destinée à illustrer, sur un exemple, un procédé suivant l'invention, pour l'établissement du mode TFO, suivant un deuxième exemple de réalisation.

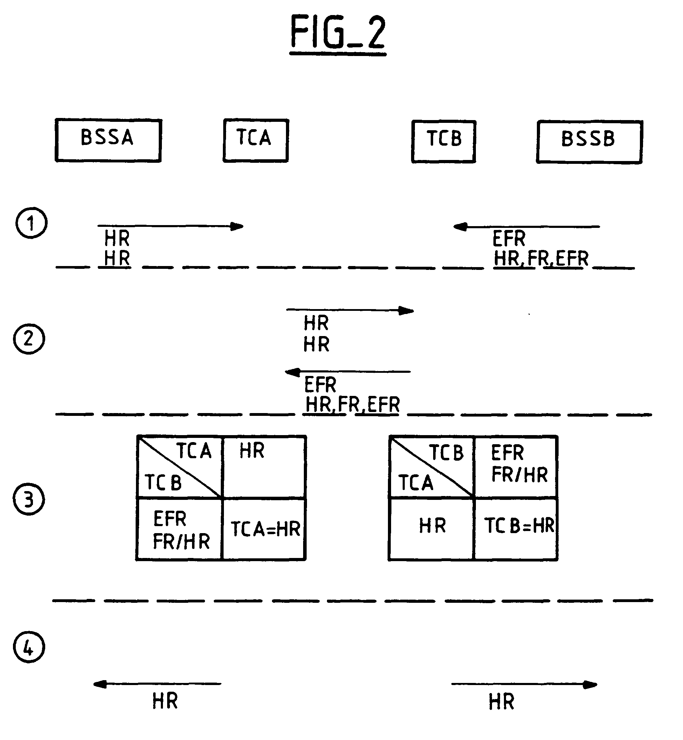

Sur la figure 2, on considère toujours, à titre d'exemple, et comme sur la figure 1, le cas d'une cellule A chargée et d'une cellule B non chargée, le mode de codage initialement sélectionné pour le mobile situé dans la cellule A étant le mode HR, le mode de codage initialement sélectionné pour le mobile situé dans la cellule B étant le mode EFR, et l'ensemble des modes de codage, à savoir HR, FR et EFR, étant supporté pour chacun des mobiles concernés.

Dans le procédé suivant la figure 2, chaque BSS commence par déterminer si, dans l'exemple considéré, le mode de codage initialement sélectionné pour le mobile concerné est le mode HR, et si la cellule correspondante est chargée. Typiquement, une cellule peut être considérée comme chargée si la quantité de ressources allouées dans cette cellule pendant une période donnée est supérieure à un seuil donné.

Si ces deux conditions sont réalisées (ce qui est le cas pour la cellule A dans l'exemple illustré), la liste des mode de codage supportés est réduite de manière à en éliminer les modes de codage FR et EFR (plus consommateurs de ressources), et donc à ne conserver que le mode HR.

Si ces deux conditions ne sont pas réalisées (ce qui est le cas pour la cellule B dans l'exemple illustré), la liste des modes de codage supportés n'est pas réduite, et comporte donc l'ensemble des modes de codage supportés possibles, à savoir dans cet exemple HR, FR et EFR.

Le procédé illustré sur la figure 2 comporte ainsi, dans l'exemple illustré:
- une étape notée 1', au cours de laquelle chaque BSS communique au transcodeur associé TC (suivant des techniques de signalisation spécifiques non rappelées ici) le mode de codage initialement sélectionné pour le mobile concerné, et la liste des modes de codage supportés ainsi obtenue,
- une étape notée 2', au cours de laquelle chaque transcodeur TC communique ces informations à l'autre transcodeur (également suivant des techniques de signalisation spécifiques non rappelées ici),
- une étape notée 3', au cours de laquelle, les modes de codage initialement sélectionnés pour chacun des mobiles étant différents, chaque transcodeur sélectionne, sur la base des listes de modes de codage supportés ainsi obtenues, et selon un même critère, un mode de codage commun pour le mode TFO,
- une étape notée 4', au cours de laquelle chaque transcodeur TC informe le BSS associé du mode de codage commun sélectionné pour le mode TFO.

Ainsi, dans l'exemple considéré, le mode de codage commun sélectionné à l'étape 3' pour le mode TFO est le mode HR. Par conséquent, et contrairement à la figure 1, le mobile situé dans la cellule A conserve le mode HR initialement sélectionné, et un changement de mode de codage est au contraire effectué pour le mobile situé dans la cellule B, du mode FR vers le mode HR.

Il apparaît ainsi que le procédé suivant la figure 2 permet d'éviter les inconvénients mentionnés précédemment avec le procédé de la figure 1, et donc d'améliorer globalement les performances du système.

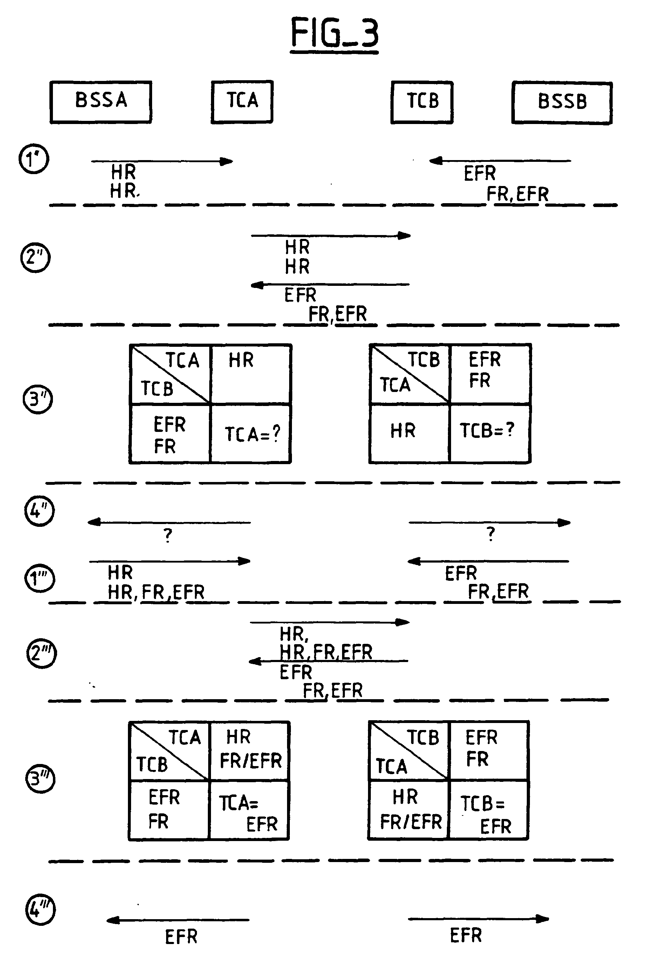

L'exemple de réalisation suivant la figure 2 suppose cependant que, dans l'exemple considéré, le mode HR soit également supporté pour le mobile situé dans la cellule non chargée (en l'occurrence la cellule B). L'exemple de réalisation illustré sur la figure 3 fournit une solution pour le cas où une telle hypothèse ne serait pas vérifiée.

Sur la figure 3, on considère toujours, à titre d'exemple, et comme sur les figures 1 et 2, le cas d'une cellule A chargée et d'une cellule B non chargée, le mode de codage initialement sélectionné pour le mobile situé dans la cellule A étant le mode HR, et le mode de codage initialement sélectionné pour le mobile situé dans la cellule B étant le mode EFR.

Sur la figure 3, on considère en outre le cas où l'ensemble des modes de codage, à savoir HR, FR et EFR, est supporté pour le mobile situé dans la cellule A, et le cas où seuls les modes FR et EFR sont supportés pour le mobile situé dans la cellule B.

Dans un premier temps un procédé similaire à celui de la figure 2 est mis en oeuvre, les étapes correspondantes étant ici notées 1", 2", 3" et 4", la liste de modes de codage supportés pour le mobile situé dans la cellule A étant, comme sur la figure 2, une liste réduite (comportant en l'occurrence le mode HR seul) et la liste de modes de codage supportés pour le mobile situé dans la cellule B étant une liste non réduite (comportant en l'occurrence les modes FR et EFR). Comme illustré au moyen de tableaux correspondants sur la figure 3, aucun mode de codage commun ne peut alors être sélectionné sur la base de telles listes de modes de codage, ce qui a été symbolisé sur la figure 3 par un point d'interrogation. Dans ce cas, si rien n'était fait, le mode de fonctionnement serait alors le mode avec double transcodage.

Si on souhaite éviter le mode de fonctionnement avec double transcodage, dans un deuxième temps et sur détection des résultats obtenus à l'issue des étapes 1" à 4", un procédé similaire à celui de la figure 1 peut être mis en oeuvre, les étapes correspondantes étant ici notées 1 "', 2"', 3"' et 4"' (on notera que les échanges de signalisation entre BSSB et TCB lors des étapes 4" et 1"", tels qu'illustrés sur la figure 3, peuvent éventuellement ne pas être prévus). La liste de modes de codage supportés pour le mobile situé dans la cellule A est alors une liste non réduite (comportant en l'occurrence les modes HR, FR et EFR), la liste de modes de codage supportés pour le mobile situé dans la cellule B étant toujours une liste non réduite (comportant en l'occurrence les modes FR et EFR). Comme illustré au moyen de tableaux correspondants sur la figure 3, le mode de codage commun sélectionné à l'étape 3"' est le mode EFR (sélectionné initialement pour le mobile situé dans la cellule B).

Ainsi, selon cef exemple de réalisation, si aucun mode de codage commun ne peut être sélectionné sur la base de listes de modes de codage dont au moins une est une liste réduite, alors un mode de codage commun est sélectionné sur la base de listes non réduites. Ceci permet de tenir compte de manière moins stricte de la charge de trafic dans la cellule chargée, en commençant par favoriser l'établissement du mode TFO avec un mode moins consommateur de ressources, puis, si ce n'est pas possible, en acceptant de l'établir avec un mode plus consommateur de ressources.

Pour compléter les procédés ainsi décrits, éventuellement, dans le cas où le mode de codage initialement sélectionné pour un mobile situé dans une cellule chargée ne serait pas le mode HR, mais l'un des modes FR ou EFR, le procédé pourrait être un procédé classique tel que rappelé sur la figure 1.

Par ailleurs, le cas où un même mode de codage serait initialement sélectionné pour chacun des mobiles (ceci étant aussi appelé "codecs match" dans les recommendations GSM précitées) pourrait être traité de manière classique, le mode de codage considéré constituant alors le mode de codage commun recherché, sans qu'il soit nécessaire de prévoir une étape spécifique de sélection de mode de codage commun.

Le procédé suivant l'invention pourrait cependant être utilisé dans le cas où, bien que le mode de codage initialement sélectionné pour chaque mobile soit le mode HR, une étape spécifique de sélection de mode de codage commun serait en outre prévue, sur la base des listes de modes de codage supportés, et selon un critère d'optimisation de qualité.

On notera que les figures 1 à 3 ne représentent que schématiquement de tels procédés, dans la mesure nécessaire à la compréhension de la présente invention, et sans entrer dans le détail des procédés ou protocoles de signalisation, qui peuvent par ailleurs faire appel à des principes classiques dans ces systèmes.

On notera en outre que ces figures correspondent à un exemple particulier, et à un système particulier, en l'occurrence le système GSM, mais que l'invention n'est pas limitée à un tel exemple et/ou à un tel système.

Notamment:
- les modes de codage HR d'une part, et FR et EFR d'autre part, ne sont qu'un exemple possible de modes de codage moins, respectivement plus, consommateurs de ressources,
- les entités homologues qui se communiquent la liste des modes de codage supportés et qui effectuent sur cette base la sélection d'un mode de codage commun pourraient être des entités autres que des transcodeurs,
- la sélection de mode de codage commun pourrait aussi, au lieu d'être effectuée séparément, et selon un même critère, dans deux entités homologues distinctes, être effectuée de manière centralisée dans une même entité.

La présente invention a également pour objet, outre un tel procédé, un système cellulaire de radiocommunications mobiles comportant des moyens de mise en oeuvre d'un tel procédé.

Dans l'exemple considéré, un tel système comporterait des moyens pour réaliser les étapes décrites précédemment.

Plus généralement, un tel système comporte essentiellement, pour l'établissement de mode de fonctionnement sans double transcodage pour un appel de mobile à mobile et de cellule à cellule, des moyens pour sélectionner un mode de codage commun pour chacun desdits mobiles, ladite sélection d'un mode de codage commun tenant compte de la charge de trafic pour au moins une desdites cellules.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé d'établissement de mode de fonctionnement sans double transcodage pour un appel de mobile à mobile, et de cellule à cellule (A, B), dans un système cellulaire de radiocommunications mobiles, ledit procédé comportant une étape (3') de sélection d'un mode de codage commun pour chacun desdits mobiles, et étant **caractérisé en ce que** ladite sélection d'un mode de codage commun tient compte de la charge de trafic dans au moins une desdites cellules (A, B).

2. Procédé selon la revendication 1, **caractérisé en ce que**, ledit mode de codage commun étant sélectionné sur la base de listes de modes de codage supportés pour chacun desdits mobiles, une liste de modes de codage supportés est réduite de manière à en éliminer les modes de codage les plus consommateurs de ressources, si le mobile correspondant est situé dans une cellule chargée (A).

3. Procédé selon la revendication 2, **caractérisé en ce que**, si aucun mode de codage commun ne peut être sélectionné (3 ") sur la base de listes de mode de codage supportés dont au moins une est une liste réduite, un mode de codage commun est alors sélectionné (3 "') sur la base de listes de modes de codage supportés non réduites.

4. Procédé selon l'une des revendications 2 et 3, **caractérisé en ce que** le critère de sélection d'un mode de codage commun sur la base de listes de modes de codage supportés pour chacun desdits mobiles est un critère d'optimisation de qualité.

5. Procédé selon l'une des revendications 2 à 4, **caractérisé en ce que**, des modes de codage étant initialement sélectionnés indépendamment l'un de l'autre pour chacun desdits mobiles, une liste de modes de codage supportés n'est réduite que si, en outre, le mode de codage initialement sélectionné pour le mobile correspondant est un des modes de codage les moins consommateurs de ressources.

6. Procédé selon l'une des revendications 2 à 5, **caractérisé en ce que**, des modes de codage étant initialement sélectionnés indépendamment l'un de l'autre pour chacun desdits mobiles, il est en outre déterminé si les modes de codage sélectionnés initialement pour chacun desdits mobiles sont identiques:
- si oui, le mode de codage correspondant constitue ledit mode de codage commun,
- sinon, ledit mode de codage commun est sélectionné sur la base desdites listes de modes de codage supportés pour chacun desdits mobiles.

7. Procédé selon l'une des revendications 2 à 6, **caractérisé en ce qu'**il comporte au moins une étape (1', 2') au cours de laquelle, pour chacun desdits mobiles, une entité dudit système en charge de l'appel pour ce mobile communique une liste de modes de codage supportés pour ce mobile à une entité homologue en charge de l'appel pour l'autre mobile, et une étape suivante (3') au cours de laquelle chacune desdites entités sélectionne, sur la base des listes de modes de codage supportées pour chacun desdits mobiles, et selon un même critère, un mode de codage commun.

8. Procédé selon les revendications 6 et 7, **caractérisé en ce qu'**il comporte en outre une étape (1', 2') au cours de laquelle, pour chacun desdits mobiles, une entité dudit système en charge de l'appel pour ce mobile communique le mode de codage initialement sélectionné pour ce mobile à une entité homologue en charge de l'appel pour l'autre mobile, et une étape suivante (3') au cours de laquelle chacune desdites entités détermine si les modes de codage initialement sélectionnés pour chacun desdits mobiles sont identiques.

9. Procédé selon l'une des revendications 1 à 8, **caractérisé en ce que** ledit système est un système de type GSM.

10. Procédé selon l'une des revndications 1 à 9, **caractérisé en ce qu'**un desdits modes de codage les moins consommateurs de ressources est le mode demi-débit (HR).

11. Procédé selon l'une des revendications 1 à 10, **caractérisé en ce qu'**un desdits modes de codage les plus consommateurs de ressources est le mode plein débit (FR).

12. Procédé selon l'une des revendications 1 à 11, **caractérisé en ce qu'**un desdits modes de codage les plus consommateurs de ressources est le mode plein débit amélioré (EFR).

13. Système cellulaire de radiocommunications mobiles, pour la mise en oeuvre d'un procédé selon l'une des revendications 1 à 12, **caractérisé en ce qu'**il comporte, pour l'établissement de mode de fonctionnement sans double transcodage pour un appel de mobile à mobile, et de cellule à cellule (A, B), des moyens pour sélectionner un mode de codage commun pour chacun desdits mobiles, ladite sélection d'un mode de codage commun tenant compte de la charge de trafic dans au moins une desdites cellules.

14. Entité (BSSA, TCA, BSSB, TCB) pour système cellulaire de radiocommunications mobiles selon la revendication 13, **caractérisée en ce que**, ladite entité étant en charge de l'appel pour un mobile, elle comporte des moyens pour communiquer une liste de modes de codage supportés pour ce mobile à une entité homologue en charge de l'appel pour l'autre mobile, ladite liste étant réduite de manière à en éliminer les modes de codage les plus consommateurs de ressources, si le mobile correspondant est situé dans une cellule chargée (A).

## Claims

1. A method of establishing the tandem free operation mode for a mobile station to mobile station and cell to cell (A, B) call in a cellular mobile telephone system, which method includes a step (3') of selecting a common coding mode for each mobile station and is **characterized in that** selection of a common coding mode takes account of the traffic load in at least one cell (A, B).

2. A method according to claim 1, **characterized in that** said common coding mode is selected on the basis of lists of coding modes supported by each mobile station and if the corresponding mobile station is in a busy cell (A) the list of supported coding modes is shortened to eliminate therefrom the coding modes that consume the most resources.

3. A method according to claim 2, **characterized in that** a common coding mode is selected (3"') on the basis of non-shortened lists of supported coding modes if no common coding mode can be selected (3") on the basis of lists of supported coding modes at least one of which is a shortened list.

4. A method according to either claim 2 or claim 3, **characterized in that** the criterion for selecting a common coding mode on the basis of lists of coding modes supported by each mobile station is a quality optimization criterion.

5. A method according to any one of claims 2 to 4, **characterized in that** common coding modes for each mobile station are initially selected independently of each other and a list of supported coding modes is shortened only if the coding mode initially selected for the corresponding mobile station is additionally one of the coding modes consuming the least resources.

6. A method according to any one of claims 2 to 5, **characterized in that** coding modes for each mobile station are initially selected independently of each other, the method further determines if the coding modes initially selected for each mobile station are identical, and:
- if they are identical, the corresponding coding mode constitutes said common coding mode, or
- if they are not identical, said common coding mode is selected on the basis of said lists of supported coding modes for each mobile station.

7. A method according to any one of claims 2 to 6, **characterized in that** it includes at least one step (1', 2') during which an entity of said system handling the call for each mobile station communicates a list of supported coding modes for that mobile station to a like entity handling the call for the other mobile station and a subsequent step (3') during which each entity selects a common coding mode on the basis of lists of supported coding modes for each mobile station and as a function of the same criterion.

8. A method according to claims 6 and 7, **characterized in that** it includes a step (1', 2') during which an entity of said system handling the call for each mobile station communicates the coding mode initially selected for that mobile station to a like entity handling the call for the other mobile station and a subsequent step (3') during which each entity determines if the coding modes initially selected for each mobile station are identical.

9. A method according to any one of claims 1 to 8, **characterized in that** said system is GSM.

10. A method according to any one of claims 1 to 9, **characterized in that** one of said coding modes consuming the least resources is half-rate mode (HR).

11. A method according to any one of claims 1 to 10, **characterized in that** one of said coding modes consuming the most resources is full-rate mode (FR).

12. A method according to any one of claims 1 to 11, **characterized in that** one of said coding modes consuming the most resources is enhanced full-rate mode (EFR).

13. A cellular mobile telephone system for implementing a method according to any one of claims 1 to 12, **characterized in that** it includes, for establishing the tandem free operation mode for a mobile station to mobile station and cell to cell (A, B) call, means for selecting a common coding mode for each mobile station taking account of the traffic load in at least one cell.

14. An entity (BSSA, TCA, BSSB, TCB) for a cellular mobile telephone system according to claim 13, said entity being **characterized in that**, handling the call for a mobile station, it includes means for communicating a list of supported coding modes for that mobile station to a like entity handling the call for the other mobile station, and if the corresponding mobile station is in a busy cell (A) said list of coding modes is shortened to eliminate therefrom the coding modes that consume the most resources.

## Patentansprüche

1. Verfahren zum Aktivieren eines Arbeitsmodus ohne doppelte Umcodierung für einen Anruf von Mobilgerät zu Mobilgerät, und von Zelle zu Zelle (A, B) in einem zellularen Funkkommunikationssystem, wobei dieses Verfahren einen Schritt (3') Auswahl eines gemeinsamen Codierungsmodus für jedes dieser Mobilgeräte beinhaltet und **dadurch gekennzeichnet ist, dass** diese Auswahl eines gemeinsamen Codierungsmodus die Verkehrsbelastung in mindestens einer dieser Zellen (A, B) berücksichtigt.

2. Verfahren gemäß Anspruch 1, **dadurch gekennzeichnet, dass** dieser gemeinsame Codierungsmodus auf der Grundlage von Listen mit Codierungsmodi ausgewählt wird, die für jedes dieser Mobilgeräte unterstützt werden, wobei eine Liste der unterstützten Codierungsmodi so reduziert wird, dass diejenigen Codierungsmodi mit dem größten Mittelverbrauch eliminiert werden, wenn das entsprechende Mobilgerät sich in einer belasteten Zelle (A) befindet.

3. Verfahren gemäß Anspruch 2, **dadurch gekennzeichnet, dass**, falls kein gemeinsamer Codierungsmodus auf der Grundlage von Listen mit unterstützten Codierungsmodi ausgewählt werden kann (3"), von denen mindestens eine eine reduzierte Liste ist, dann ein gemeinsamer Codierungsmodus auf der Grundlage von nicht reduzierten Listen mit unterstützten Codierungsmodi ausgewählt wird (3"').

4. Verfahren gemäß einem der Ansprüche 2 und 3, **dadurch gekennzeichnet, dass** das Auswahlkriterium für einen gemeinsamen Codierungsmodus auf der Grundlage von Listen mit jeweils für diese Mobilgeräte unterstützten Codierungsmodi ein Qualitätsoptimierungskriterium ist.

5. Verfahren gemäß einem der Ansprüche 2 bis 4, **dadurch gekennzeichnet, dass**, da die Codierungsmodi ursprünglich unabhängig voneinander für jedes dieser Mobilgeräte ausgewählt wurden, eine Liste mit den unterstützten Codierungsmodi nur dann reduziert wird, wenn außerdem der ursprünglich für das entsprechende Mobilgerät ausgewählte Codierungsmodus einer der Codierungsmodi mit dem geringsten Mittelverbrauch ist.

6. Verfahren gemäß einem der Ansprüche 2 bis 5, **dadurch gekennzeichnet, dass**, da die Codierungsmodi ursprünglich unabhängig voneinander für jedes dieser Mobilgeräte ausgewählt werden, außerdem bestimmt wird, ob die ursprünglich jeweils für die Mobilgeräte ausgewählten Codierungsmodi identisch sind:
- falls ja stellt der entsprechende Codierungsmodus diesen gemeinsamen Codierungsmodus dar,
- ansonsten wird dieser gemeinsame Codierungsmodus auf der Grundlage dieser Listen mit Codierungsmodi ausgewählt, die jeweils für diese Mobilgeräte unterstützt werden.

7. Verfahren gemäß einem der Ansprüche 2 bis 6, **dadurch gekennzeichnet, dass** es mindestens einen Schritt (1', 2') beinhaltet, in dessen Verlauf für jedes dieser Mobilgeräte eine Instanz dieses Systems, die den Anruf für dieses Mobilgerät unterstützt, eine Liste mit für dieses Mobilgerät unterstützen Codierungsmodi an eine homologe Instanz übermittelt, die den Anruf für das andere Mobilgerät unterstützt, und einen folgenden Schritt (3'), in dessen Verlauf jede dieser Instanzen auf der Grundlage von Listen mit Codierungsmodi, die jeweils für diese Mobilgeräte unterstützt werden und gemäß einem gleichen Kriterium einen gemeinsamen Codierungsmodus auswählt.

8. Verfahren gemäß den Ansprüchen 6 und 7, **dadurch gekennzeichnet, dass** es überdies einen Schritt (1', 2') beinhaltet, in dessen Verlauf für jedes dieser Mobilgeräte eine Instanz dieses Systems, die den Anruf für dieses Mobilgerät unterstützt, den ursprünglich für dieses Mobilgerät ausgewählten Codierungsmodus an eine homologe Instanz mitteilt, die den Anruf für das andere Mobilgerät unterstützt, und einen folgenden Schritt (3'), in dessen Verlauf jede dieser Instanzen ermittelt, ob die ursprünglich jeweils für diese Mobilgeräte ausgewählten Codierungsmodi identisch sind.

9. Verfahren gemäß einem der Ansprüche 1 bis 8, **dadurch gekennzeichnet, dass** es sich bei diesem System um ein GSM-System handelt.

10. Verfahren gemäß einem der Ansprüche 1 bis 9, **dadurch gekennzeichnet, dass** einer dieser Codierungsmodi mit dem geringsten Mittelverbrauch der Modus halbe Übertragungsgeschwindigkeit (HR) ist.

11. Verfahren gemäß einem der Ansprüche 1 bis 10, **dadurch gekennzeichnet, dass** einer der Codierungsmodi mit dem höchsten Mittelverbrauch der Modus volle Übertragungsgeschwindigkeit (FR) ist.

12. Verfahren gemäß einem der Ansprüche 1 bis 11, **dadurch gekennzeichnet, dass** einer dieser Codierungsmodi mit dem höchsten Mittelverbrauch der Modus verbesserte volle Übertragungsgeschwindigkeit (EFR) ist.

13. Zellulares Funkkommunikationssystem für die Ausführung eines Verfahrens gemäß einem der Ansprüche 1 bis 12, **dadurch gekennzeichnet, dass** es zum Aktivieren eines Arbeitsmodus ohne doppelte Umcodierung für einen Anruf von Mobilgerät zu Mobilgerät und von Zelle zu Zelle (A, B) Mittel enthält, um einen gemeinsamen Codierungsmodus für jedes dieser Mobilgeräte auszuwählen, wobei diese Auswahl eines gemeinsamen Codierungsmodus die Verkehrsbelastung in mindestens einer dieser Zellen berücksichtigt.

14. Instanz (BSSA, TCA, BSSB, TCB) für zellulares Funkkommunikationssystem gemäß Anspruch 13, **dadurch gekennzeichnet, dass** diese Instanz, die den Anruf für ein Mobilgerät unterstützt, Mittel enthält, um eine Liste mit für dieses Mobilgerät unterstützten Codierungsmodi an eine homologe Instanz zu übermitteln, die den Anruf für das andere Mobilgerät unterstützt, wobei diese Liste reduziert wird, so dass die Codierungsmodi mit dem höchsten Mittelverbrauch daraus entfernt werden, wenn das entsprechende Mobilgerät in einer belasteten Zelle (A) liegt.
